# FASCICULE DE BREVET EUROPEEN

(11) **EP 4 055 128 B1**
(45) Date de publication et mention de la délivrance du brevet: **26.03.2025**
(21) Numéro de dépôt: 20807298.3
(22) Date de dépôt: 06.11.2020
(51) Int. Cl.: C10L 5/42, C10L 5/44

(54) **PROCÉDÉ ET INSTALLATION DE GÉNÉRATION DE MATIÈRE COMBUSTIBLE À PARTIR DE DÉCHETS DE MATIÈRE ORGANIQUE CONTENANT UNE MAJORITÉ DE PLANTES HERBACÉES**
VERFAHREN UND SYSTEM ZUR ERZEUGUNG VON BRENNBAREM MATERIAL AUS ORGANISCHEN ABFÄLLEN MIT EINER MEHRZAHL VON KRÄUTERPFLANZEN
METHOD AND SYSTEM FOR GENERATING COMBUSTIBLE MATERIAL FROM ORGANIC WASTE CONTAINING A MAJORITY OF HERBACEOUS PLANTS

(30) Priorité: 07.11.2019 FR 1912507
(43) Date de publication de la demande: 14.09.2022
(73) Titulaire: Xare Invest B.V., 2548 SC 's-Gravenhage (NL)
(72) Inventeur: GOUBIN, Eric, 74200 MARIN (FR); SANDELL, Xander, 74200 ANTHY SUR LEMAN (FR)
(74) Mandataire: Innovincia
(86) Numéro de dépôt international: PCT/EP2020/081362
(87) Numéro de publication internationale: WO 2021/089827

(56) Documents cités:
- WO-A1-2007/093143

## Description

La présente invention concerne un procédé et une installation de traitement de déchets de matière organique contenant une majorité de plantes herbacées, par exemple du fumier animal ou des tontes le long des infrastructures de transports (autoroutes, routes, voies ferrées, canaux, rivières, fleuves), dans le cadre d'une revalorisation par production de matière combustible. Ces déchets organiques contiennent par exemple beaucoup de végétaux de type des poacées et graminées.

Ces déchets organiques contenant une majorité de plantes herbacées, par exemple du fumier animal ou des tontes le long des infrastructures de transports (autoroutes, routes, voies ferrées, canaux, rivières, fleuves) sont actuellement seulement valorisés dans le cadre du compostage ou dans des installations de méthanisation.

Le biogaz, ou méthane de fermentation, est une manière de revaloriser les déchets organiques contenant des matières végétales fibreuses, riches en lignine, tels que le fumier animal, en particulier le fumier équin ou les chutes de tontes, par exemple issues de tontes le long d'une autoroute. En effet, les centres équestres et fermes produisent du fumier animal qui peut être utilisé pour l'élaboration de biogaz, et les chutes de végétaux fibreux sont aussi potentiellement intéressantes à cette fin.

Par fumier on entend ici un mélange de déjections animales et d'une litière organique, telle que de la paille.

L'élaboration de biogaz repose sur la digestion anaérobie de la biomasse composant l'essentiel du fumier par des microorganismes. Ces microorganismes sont spontanément présents dans le fumier et les déchets. Ils libèrent en particulier du méthane et du dioxyde de carbone à partir de molécules organiques.

La méthanisation est effectuée dans des installations de méthanisation, qui sont généralement de taille importante. Ces centres de méthanisation sont les lieux où le biogaz est généré et utilisé pour générer par exemple de l'énergie électrique ou de la chaleur, ou bien pour être injecté dans un réseau de gaz. Leur localisation est indépendante et potentiellement éloignée de celle des centres équestres, haras et fermes où les animaux produisent le fumier et des lieux où les tontes et tailles ont lieu et leurs déchets sont collectés.

Généralement, les installations de méthanisation sont directement alimentées par des déchets végétaux et introduit dans un digesteur.

De plus, le fumier et les déchets végétaux sont continuellement sujets à la fermentation par digestion aérobie, et le méthane produit pendant leur stockage et leur transport et donc avant d'être introduit dans le digesteur est potentiellement perdu. De plus ce méthane perdu peut aussi poser des problèmes écologiques en termes de réchauffement climatique étant donné que l'effet de serre dû au méthane est quatre fois plus important que celui du dioxyde de carbone.

En outre, l'acheminement des matières à l'état brut est coûteux en ressources du fait d'un poids important du fumier et des déchets dû notamment à l'importance de leur portion aqueuse. En effet, l'eau présente dans le fumier ne contribue pas à la méthanisation, tandis qu'elle représente un poids important. En effet, si on transporte du fumier animal sur de longues distances, on transporte essentiellement de l'eau. Vue le poids de l'eau dans le fumier animal, le nombre de camions nécessaires pour le transport du fumier est élevé et contribue aussi à un effet climatique négatif.

Les inventeurs de la présente invention ont pu constater que cette façon traditionnelle de valorisation peut être largement améliorée en transformant des déchets de matière organique contenant une majorité de plantes herbacées en granulés de combustible.

Il existe actuellement des granulés de bois comme combustibles qui sont faits à partir de déchets de bois.

Par ailleurs WO2007093143 décrit une installation et un procédé de fabrication de pellets combustible à partir de fumier équin qui traite le fumier équin dans son ensemble.

Il existe donc un besoin d'un procédé amélioré de génération d'une matière combustible.

Afin de surmonter au moins partiellement les problèmes précédemment mentionnés, l'invention a pour objet un procédé de traitement de déchets de matière organique contenant une majorité de plantes herbacées, notamment de la famille des graminées ou poacées, de préférence d'au moins 60% comme par exemple du fumier animal et plus spécifiquement du fumier équin pour l'élaboration de matière combustible,
caractérisé en ce qu'il comporte les étapes suivantes:
- une première étape de séchage de la matière organique contenant une majorité de plantes herbacées par soufflage d'air chaud notamment à une température allant de 60 à 120°C jusqu'à atteindre une portion de masse sèche comprise entre 60% et 80%,
- une étape de séparation dans un séparateur par densité pour extraire de la matière organique séchée une portion herbacée séchée,
- une deuxième étape de séchage appliquée à la portion herbacée séchée jusqu'à ce que celle-ci possède une portion de masse sèche comprise entre 85% à 95%,
- une étape de broyage de la portion herbacée séchée issue de la deuxième étape de séchage dans un broyeur mécanique en particules de taille inférieure à 20mm, de préférence entre 5 et 15mm, pour éclatement mécanique de la protection de lignine des parois cellulaires,
- une étape de pressage de la portion herbacée séchée et broyée en granulés dans une presse à granulés.

Le procédé permet ainsi d'obtenir une matière première sèche dont la manipulation est aisée, et qui présente en outre une odeur très faible voire imperceptible. Le séchage permet d'enlever la partie aqueuse des déchets de matière organique contenant une majorité de plantes herbacées, ce qui allège dans des proportions très importante le poids. Le séchage permet de plus d'interrompre la digestion aérobie et la libération intempestive de méthane et donc de garder la fraction combustible.

La première étape de séchage avant l'étape de séparation permet d'augmenter la différence de densité entre la matière organique et d'éventuels éléments à écarter tels que des déchets, en particulier dans le cas de fumier animal, et plus spécifiquement du fumier équin.

Le broyage de la portion herbacée séchée après séparation éclate de façon mécanique la protection de lignine des parois cellulaires. La lignine étant une protection hydrophobe des cellules, sa destruction permet, de mieux déshydrater et donc d'obtenir des granulés ayant une haute concentration en combustible facilement inflammable.

La matière conditionnée en granulés et séchée peut notamment aisément être stockée de façon prolongée, et transportée ensuite à des points de ventes ou des fourneaux où elle sera brûlée, par exemple pour le chauffage d'un bâtiment.

Enfin, les granulés ne contiennent quasiment que de la matière « combustible ».

Le procédé peut en outre présenter une ou plusieurs des caractéristiques suivantes, prises seules ou en combinaison.

Les première et deuxième étapes de séchage sont par exemple réalisées au cours du transport de la matière organique contenant une majorité de plantes herbacées vers respectivement le séparateur par densité et vers le broyeur mécanique.

Le transport et le séchage de la matière organique contenant une majorité de plantes herbacées sont alors combinés ce qui permet un traitement quasiment en continue.

Les étapes de séchage sont notamment réalisées par un convoyeur à lattes à mouvement de va-et-vient comprenant un plancher de transport avec des lattes mobile d'entrainement munies d'ouvertures de soufflage d'air chaud pour le séchage de la matière organique contenant une majorité de plantes herbacées lors du transport.

Le broyeur mécanique est notamment un broyeur à marteaux, mais un broyeur à lames, un broyeur à cylindre, un broyeur à chaîne, ou un broyeur à ciseaux sont également envisageables.

Le procédé peut comporter une étape finale de chauffage des granulés à une température supérieure à 100°C pendant au moins 30mn pour leur stérilisation thermique.

La stérilisation plus complète permet d'obtenir des granulés manipulables sans précautions anti pathogènes.

L'invention concerne également une installation pour la mise en œuvre du procédé de traitement tel que défini ci-dessus, caractérisé en ce qu'elle comporte :
- un premier convoyeur-sécheur configuré pour réaliser une première étape de séchage de la matière organique contenant une majorité de plantes herbacées par soufflage d'air chaud notamment à une température allant de 60 à 120°C jusqu'à atteindre une portion de masse sèche comprise entre 60% et 80%,
- un séparateur par densité disposé en aval du premier convoyeur-sécheur et configuré pour réaliser une étape de séparation afin d'extraire de la matière organique séchée une portion herbacée séchée,
- un deuxième convoyeur-sécheur disposé en aval du séparateur par densité et configuré pour réaliser une deuxième étape de séchage appliquée à la portion herbacée séchée jusqu'à ce que celle-ci possède une portion de masse sèche comprise entre 85 à 95%,
- un broyeur mécanique disposé en aval du deuxième convoyeur sécheur et configuré pour réaliser une étape de broyage de la portion herbacée séchée issue de la deuxième étape de séchage en particules de taille inférieure à 20mm, de préférence entre 5 et 15mm, pour éclatement mécanique de la protection de lignine des parois cellulaires,
- une presse à granulés disposée en aval du broyeur mécanique et configurée pour réaliser une étape de pressage de la portion herbacée séchée et broyée en granulés.

Les premier et deuxième convoyeur-sécheurs sont par exemple des convoyeurs à lattes comprenant un plancher de transport avec des lattes mobiles d'entrainement munies d'ouvertures de soufflage d'air chaud pour le séchage de la matière organique contenant une majorité de plantes herbacées lors du transport.

L'installation peut comporter un chauffage ou four disposé en aval de la presse à granulés et configuré pour réaliser une étape de stérilisation thermique des granulés issus de la presse à granulés.

L'invention concerne également des granulés obtenus par agglomération de particules de matière organique de taille inférieure à 10mm, la matière organique contenant au moins 80%, de préférence au moins 90% de plantes herbacées, notamment de la famille des graminées ou poacées et avec une masse sèche de 85% à 95%.

La matière organique de ces granulés est composée au moins partiellement de fumier paillé, et dans ce cas les granulés comportent entre 0,5 et 3% de matière fécale résiduelle formant un liant entre les particules des granulés.

L'invention peut également concerner de façon indépendante un convoyeur à lattes à mouvement de va-et-vient comprenant un plancher de transport à lattes mobiles et munies d'ouvertures de soufflage d'air chaud pour le séchage de la matière organique contenant une majorité de plantes herbacées lors du transport.

Ces ouvertures 10 sont par exemple régulièrement réparties avec un espacement de 5 à 15cm, typiquement 10cm entre deux ouvertures 10.

Selon un aspect les ouvertures sont reliées via un caisson de surpression disposé sous les lattes mobiles à un souffleur d'air chaud pour injecter de l'air chaud par en dessous dans les déchets de matière organique.

Les ouvertures sont par exemple réalisées sous forme de buses, notamment convergentes, de diffusion d'air chaud.

D'autres caractéristiques et avantages de l'invention apparaîtront plus clairement à la lecture de la description suivante, donnée à titre d'exemple illustratif et non limitatif, et des dessins annexés parmi lesquels :
[Fig.1] montre schématiquement une installation de traitement pour la mise en œuvre du procédé,
[Fig.2] est une vue en coupe schématique d'une latte du convoyeur de la figure 1, et
[Fig.3] est un organigramme linéaire du procédé associé à l'installation de la figure 1.

Les réalisations décrites en faisant référence aux figures sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres modes de réalisation.

Par « amont » ou « aval », on situe les éléments / équipements dans le sens de transport du flux de matière à traiter. Ainsi, un premier équipement ou élément est situé en amont d'un deuxième équipement ou élément si la matière est d'abord traitée par le premier puis le second équipement.

Par portion herbacée séchée, on entend la partie des déchets organiques dépourvue de portions compactes comme par exemple de crottin animal et d'autres corps étrangers comme par exemple de déchets métalliques (des canettes ou des fers à cheval). Il s'agit de la portion légère séchée formée les de particules / brins végétaux dont le poids est inférieur à 2g.

Par taille de particules, on entend la taille selon la plus grande extension, par exemple la longueur d'un brin de paille.

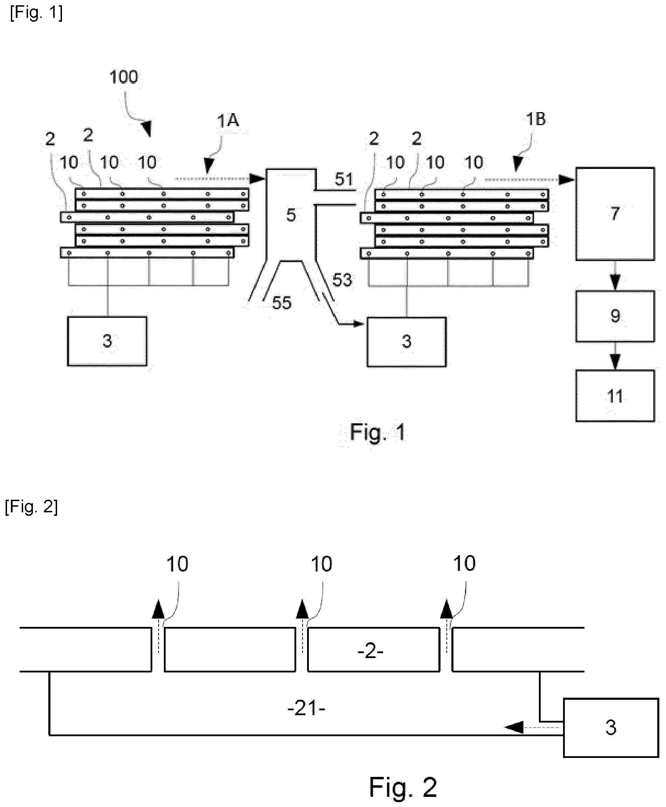

La figure 1 est une vue schématique d'une installation de traitement 100 de déchets de matière organique contenant une majorité de plantes herbacées, notamment de la famille des graminées ou poacées, de préférence d'au moins 60% comme par exemple du fumier animal et plus spécifiquement du fumier équin pour l'élaboration de matière combustible. Il peut aussi s'agir de déchets de cannes de maïs, bagasse et tiges de canne à sucre ou simplement de la paille ou du foin déclassés.

Ces déchets organiques sont riches en hémicellulose et/ou cellulose et pauvre en lignine, mais les polymères de lignine rendent la paroi cellulaire rigide et imperméable. Ces propriétés rendent la matière organique peu propice à être complètement séché pour servir ensuite de combustible et limitant l'inflammabilité.

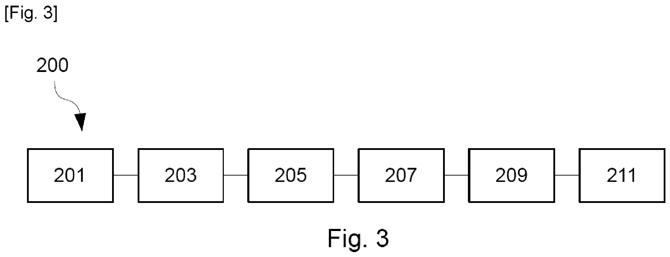

Le procédé de traitement 200 mis en œuvre dans l'installation 100 de la figure 1 est représenté en figure 3 sous forme d'organigramme reprenant les étapes majeures dudit procédé 200.

Lors d'une étape préalable 201 du procédé 200, les déchets de matière organique contenant une majorité de plantes herbacées sont reçus et mis sur un premier convoyeur-sécheur 1A.

Puis, lors d'une première étape de séchage 201, la matière organique contenant une majorité de plantes herbacées par soufflage d'air chaud est chauffée et séchée notamment à une température allant de 60 à 120°C jusqu'à atteindre une portion de masse sèche comprise entre 60% et 80%.

Cette première étape de séchage est réalisée par le convoyeur sécheur 1A. Ainsi, le transport vers une prochaine station de traitement et le séchage peuvent être combinés.

Le convoyeur-sécheur 1A peut être un convoyeur à lattes en mouvement, notamment de la marque KEITH (marque déposée), qui est adapté pour la présente invention pour permettre à la fois le convoyage et le séchage.

Le principe général de ces convoyeurs à lattes est décrit dans le brevet EP 1 481 925 intitulé "convoyeur à lattes à mouvement de va-et-vient à grand rendement" au nom de KEITH INVESTMENTS LLC ou dans le document US5310044. Selon le principe général, un tel convoyeur comporte un plancher formé de lattes mobiles 2 entrainées par un mécanisme d'entrainement selon un mouvement de va et vient parallèle à la direction de transport. En fonctionnement, les déchets de matière organique sont déchargés à une extrémité sur les lattes 2 mobiles d'entrainement. Selon une phase de transport, toutes les lattes mobiles d'entrainement 2 sont entraînées ensembles dans la direction de transport indiqué par une flèche pointillée sur la figure 1. Lors de cette phase de transport, les déchets avancent d'une distance correspondant à la course de déplacement des lattes mobiles d'entrainement 2. Puis, lors d'une phase de retrait, les lattes mobiles 2 glissent en direction inverse progressivement de façon décalée dans le temps en plusieurs groupes. Par exemple d'abord un premier tiers des lattes 2, puis un deuxième tiers et enfin un troisième tiers en laissant à chaque fois deux lattes 2 immobile entre deux lattes 2 qui reculent jusqu'à ce que toutes les lattes mobiles d'entrainement 2 se retrouvent à nouveau dans la position de départ de la phase de transport. Du fait du poids de la matière organique et des phénomènes de friction, lors de la phase de retrait, la matière organique reste immobile.

A la différence du convoyeur à lattes à mouvement de va-et-vient décrit dans l'état de la technique, le convoyeur-sécheur 1A comprend un plancher de transport avec des lattes mobiles 2 munies d'ouvertures 10 de soufflage d'air chaud pour le séchage de la matière organique contenant une majorité de plantes herbacées lors du transport.

Ainsi, les lattes 2 mobiles du convoyeur à lattes, sont pourvues d'ouvertures 10, non décrites dans EP 1 481 925, par exemple sous forme de buses de diffusion d'air chaud. Ces ouvertures 10 sont par exemple régulièrement réparties avec un espacement de 5 à 15cm, typiquement 10cm entre deux ouvertures 10.

Comme on peut le voir sur la figure 2 qui est une vue en coupe d'une latte 2 avec une portion du convoyeur 1 dans un mode de réalisation particulier, les ouvertures 10 sont reliées via un caisson 21 de surpression à un souffleur d'air chaud 3, produisant un flux d'air chauffé à au moins 60°C, préférentiellement de 60 à 120°C, ici en particulier de 60 à 80°C. Le flux d'air est injecté par les ouvertures 10 pour pénétrer dans les déchets de matière organique par le bas. Les déchets de matière organique sont ainsi séchés pendant le transport. Le débit d'air chauffé et la vitesse de convoyage peuvent être ajustés de sorte à ce que la matière organique en sortie du convoyeur-sécheur 1 présente une fraction de matière sèche supérieure à 60 à 80%, en particulier 70%.

Selon un autre mode de réalisation du convoyeur-sécheurs 1, les ouvertures 10 peuvent être formées par les fentes entre deux lattes 2 adjacentes.

Dans le cas où les déchets organiques sont du fumier paillé animal, en particulier du fumier équin, l'avantage du convoyeur à lattes à mouvement de va-et-vient réside dans le fait que lors du transport, les boulettes de crottins sont séchées sur l'extérieur sans être désagrégées, ce qui facilite la séparation par densité par la suite.

En variante non représentée, le convoyeur-sécheur 1A peut comprendre un tunnel de séchage à tambour rotatif dans lequel par des pâles d'entraînement, les déchets de matière organique sont transportés et brassés à contrecourant d'un flux d'air chaud.

D'autres types de convoyeurs sont aussi utilisables, par exemple un convoyeur à bacs mobiles, un tapis roulant etc. Le séchage et le transport de la matière organique peuvent en alternative se faire dans deux machines séparées, avec un four ou séchoir et un convoyeur séparés. La solution proposée en figure 1 permet toutefois de combiner les étapes de transport et de séchage.

Cette première étape de séchage 201 permet de préparer les déchets organiques à une séparation par densité. En particulier, les parties herbacées, car légères, sèchent plus facilement et plus rapidement de sorte leur densité diminue davantage que les autres fractions comme par exemple des boulettes de crottins qui ne sèchent qu'en surface et gardent l'essentiel de la partie aqueuse.

Le séchage partiel est donc surtout effectué en séchant la matière formant la fraction légère. L'humidité restante se concentrera donc majoritairement dans des boulettes de crottin et copeaux plus épais formant la fraction moyenne.

En aval du convoyeur sécheur 1A est donc disposé un séparateur par densité 5. Le séparateur 5 est configuré pour réaliser une étape de séparation par différence de densité 203 afin d'extraire de la matière organique séchée une portion herbacée séchée. Quand les déchets organiques sont par exemple du fumier animal, cette portion herbacée séchée comprend essentiellement des brins de paille, des fibres et des tiges, avec un grand rapport surface/volume. La partie plus lourde est généralement formée par les crottins des chevaux.

Le séparateur par densité 5 permet donc de diviser les déchets organiques séchés en plusieurs fractions de densité différente, par centrifugation, gravité ou entraînement par flux d'air et en particulier d'écarter les portions retenant de l'humidité. Le séparateur par densité 5 présente plusieurs sorties 51, 53, 55, pour respectivement une fraction légère (portion herbacée), moyenne (par exemple crottins d'animaux) ou dense (par exemple résidus métalliques) des déchets de matière organique.

En particulier, le séparateur par densité 5 sépare du reste de la matière organique une fraction ou portion herbacée séchée, contenant l'essentiel des fibres ligneuses (paille, gazon coupé, feuilles etc.). Le séparateur 5 sépare aussi le reste de la matière en une fraction moyenne, contenant par exemple le crottin partiellement séché et éventuels copeaux de bois, et une fraction dense, contenant alors principalement des déchets métalliques, plastiques ou autres.

Le séparateur par densité 5 peut en outre comporter un aimant bande, la matière organique passant à proximité dudit aimant à bandes pour en extraire d'éventuelles dernières particules métalliques.

La fraction moyenne peut être brûlée dans un fourneau, et la chaleur dégagée peut notamment servir à chauffer l'air du souffleur d'air chaud 3. La fraction dense est écartée, et envoyée au traitement de déchets ménagers ou au recyclage selon son contenu.

La portion herbacée séchée de la matière organique est alors envoyée via la sortie 51 sur un deuxième convoyeur sécheur 1B disposé en aval du séparateur par densité 5 et de préférence de même structure que le convoyeur-sécheur 1A. Le convoyeur sécheur 1B est configuré pour réaliser une deuxième étape de séchage 205 appliquée à la portion herbacée séchée et seulement à celle-ci jusqu'à ce que cette portion herbacée possède une portion de masse sèche comprise entre 85 à 95% typiquement 90%.

Le séchage par soufflage d'air chaud permet en outre d'hygiéniser la matière organique. Par hygiénisation, on entend ici une pasteurisation ou stérilisation partielle, réduisant le taux de pathogènes dans des proportions acceptables. Cette hygiénisation, bien que n'éliminant pas la totalité ou quasi-totalité des pathogènes, suffit à rendre la matière organique peu susceptible de contamination par un humain lors de sa manipulation.

Le traitement thermique par soufflage d'air à 60 à 80°C pendant plusieurs dizaines de minutes permet notamment de détruire la plupart des parasites tels que les nématodes, et réduit fortement le nombre de bactéries présentes.

En aval du deuxième convoyeur-sécheur 1B est disposé un broyeur mécanique 7 configuré pour réaliser une étape de broyage 207 de la portion herbacée séchée issue de la deuxième étape de séchage 205 en particules de taille inférieure à 20mm, de préférence entre 5 et 15mm, pour un éclatement mécanique de la protection de lignine des parois cellulaires.

Le broyeur mécanique 7 est en particulier un broyeur à marteaux 7, qui hache et cisaille la portion herbacée séchée de la matière organique en morceaux et brins.

D'autres broyeurs mécaniques peuvent être utilisés : broyeurs à lames, broyeurs à cylindre, broyeurs à chaînes, broyeurs à ciseaux etc. En particulier, selon la taille des particules de la matière organique, plusieurs broyeurs de types différents peuvent être utilisés successivement. Les broyeurs à marteaux, du fait d'un éclatement par compression plus important, produisent une matière de qualité meilleure que d'autres broyeurs à taille de copeaux égale.

La lignine des parois cellulaires ainsi éclatées permet un séchage plus efficace et rapide. Cet éclatement mécanique des fibres ne nécessite pas d'ajout de substances (acide, enzymes etc.), et aucun temps de repos. Le traitement de la matière organique est donc rapide et potentiellement moins coûteux.

Le traitement total du procédé ne dure que quelques heures.

L'installation de la figure 1 comporte en outre une presse à granulés 9 disposée en aval du broyeur mécanique 7. La presse à granulés 9 presse la portion herbacée séchée et broyée en granulés agglomérés, de façon analogue au pressage de granulés de bois à partir de sciure lors d'une étape de pressage 209.

Une telle presse à granulés 9 comporte par exemple une filière comme une vis sans fin, et une grille perforée. La vis sans fin guide et compresse la matière organique contre la grille perforée, et la matière organique compressée sort alors par les perforations de la grille sous forme de fils ou boudins qui, après cassure du fait de leur propre poids ou par découpe donnent les granulés.

La grille, notamment par ses perforations, permet de sélectionner la taille et la forme des granulés. Les granulés sont typiquement tubulaires, avec une section circulaire d'un diamètre compris entre 4 et 12mm, généralement autour de 6 à 8mm. Leur longueur moyenne est alors de l'ordre de 5 à 15mm, avec des fibres d'une longueur inférieure à 10mm.

Le pressage 209 de la portion herbacée séchée et broyée en granulés permet d'une part d'obtenir des granulés solides, compacts et faciles à manipuler, et d'autre part contribue à l'éclatement mécanique des fibres, mais de façon moins importante que le broyage 207. Le pressage 209 cause aussi une montée brusque en pression et en température contribuant à éliminer des pathogènes potentiels (œufs, cystes, spores).

De façon facultative, les granulés sortant de la presse à granulés 9 sont alors chauffés lors d'une étape 211 par un chauffage ou four 11, à une température supérieure à 100°C, en particulier comprise entre 105 et 120°C ou plus, pendant 5 à 25 minutes afin de les stériliser par traitement thermique. La température et la durée de stérilisation peuvent varier selon le type de pathogènes à éliminer (virus, bactéries, amibes, prions etc.). Des prions, par exemple, nécessitent des températures de 130 à 140°C pour leur élimination.

Il existe notamment des protocoles de durée et de températures spécifiques selon la nature des pathogènes suspectés d'être présents.

Les granulés ainsi obtenus peuvent être manipulés sans précautions anti pathogènes, ils présentent une odeur faible et leur dosage est aisé. Les granulés sont en outre légers car séchés et compacts car compressés. Ils peuvent donc être transportés efficacement, et stockés pour des durées prolongées du fait de leur stérilité et/ou de leur caractère déshydraté. La simple addition d'eau, ainsi que d'éventuels ferments, permet d'obtenir rapidement une production de gaz importante avec un rendement élevé.

Du fait du séchage, de la séparation et l'éclatement mécanique des fibres et de la lignine, on concentre la fraction combustible de la matière organique à traiter contenant une majorité de plantes herbacées.

Les granulés obtenus par agglomération de particules de matière organique sont de taille inférieure à 10mm, et contiennent au moins 80%, de préférence au moins 90% de plantes herbacées, notamment de la famille des graminées ou poacées et avec une masse sèche de 85% à 95%.

Lorsque la matière organique est composée au moins partiellement de fumier paillé, les granulés comportent de 0,5 à 3% de matière fécale résiduelle. Cette matière fécale résiduelle forme un liant entre les particules lors du pressage qui améliore la cohésion des granulés, tout en étant elle-même combustible.

Le procédé 200 peut être automatisé et mis en place en continu en reliant entre elles ou au moyen de convoyeurs les entrées et sorties des différentes machines (séparateur 5, broyeur 7, presse 9, etc.) dans l'installation 100.

Une partie des granulés obtenus peut notamment être réutilisée sur place, par exemple pour chauffer l'air des souffleurs d'air chaud 3 ou bien le four de stérilisation 9.

Le procédé 200 et l'installation 100 associée permettent d'obtenir, avec une dépense énergétique d'environ 0,2MWh par tonne de matière un produit permettant de générer, par combustion, environ 2 à 3MWh par tonne de granulés, soit un facteur d'au moins 10. En outre, le procédé 200 dans son ensemble peut être réalisé avec une durée de quelques heures entre l'arrivée de la matière organique et la fin de la dernière étape de stérilisation.

En résumé, les étapes de séchage et de séparation permettent d'extraire des déchets de matière organique contenant une majorité de plantes herbacées un concentré de matière organique combustible (la portion herbacée séchée). L'étape de broyage rend la matière organique combustible de la portion herbacée séchée plus facilement inflammable.

## Revendications

1. Procédé de traitement de déchets de matière organique contenant une majorité de plantes herbacées, notamment de la famille des graminées ou poacées, de préférence d'au moins 60% comme par exemple du fumier animal et plus spécifiquement du fumier équin pour l'élaboration de matière combustible,
**caractérisé en ce qu'**il comporte les étapes suivantes:
- une première étape de séchage (201) de la matière organique contenant une majorité de plantes herbacées par soufflage d'air chaud notamment à une température allant de 60 à 120°C jusqu'à atteindre une portion de masse sèche comprise entre 60% et 80%,
- une étape de séparation (203) dans un séparateur par densité (5) pour extraire de la matière organique séchée une portion herbacée séchée,
- une deuxième étape de séchage (205) appliquée à la portion herbacée séchée jusqu'à ce que celle-ci possède une portion de masse sèche comprise entre 85% à 95%,
- une étape de broyage (207) de la portion herbacée séchée issue de la deuxième étape de séchage dans un broyeur mécanique (7) en particules de taille inférieure à 20mm, de préférence entre 5 et 15mm, pour éclatement mécanique de la protection de lignine des parois cellulaires,
- une étape de pressage (209) de la portion herbacée séchée et broyée en granulés dans une presse à granulés (9).

2. Procédé selon la revendication 1, **caractérisé en ce que** les première et deuxième étapes de séchage (201, 205) sont réalisées au cours du transport de la matière organique contenant une majorité de plantes herbacées vers respectivement le séparateur par densité (5) et vers le broyeur mécanique (7).

3. Procédé selon la revendication 2, **caractérisé en ce que** les étapes de séchage (201, 205) sont réalisées par un convoyeur (1A, 1B) à lattes comprenant un plancher de transport avec des lattes mobiles d'entrainement (2) munies d'ouvertures (10) de soufflage d'air chaud pour le séchage de la matière organique contenant une majorité de plantes herbacées lors du transport.

4. Procédé selon l'une des revendications précédentes **caractérisé en ce que** le broyeur mécanique (7) est un broyeur à marteaux.

5. Procédé selon l'une des revendications précédentes **caractérisé en ce qu'**il comporte une étape finale de chauffage des granulés à une température supérieure à 100°C pendant au moins 30mn pour leur stérilisation thermique (211).

6. Installation pour la mise en œuvre du procédé de traitement selon l'une au moins des revendications précédentes, **caractérisé en ce qu'**elle comporte :
- un premier convoyeur-sécheur (1A) configuré pour réaliser une première étape de séchage (201) de la matière organique contenant une majorité de plantes herbacées par soufflage d'air chaud notamment à une température allant de 60 à 120°C jusqu'à atteindre une portion de masse sèche comprise entre 60% et 80%,
- un séparateur par densité (5) disposé en aval du premier convoyeur-sécheur (1A) et configuré pour réaliser une étape de séparation (203) afin d'extraire de la matière organique séchée une portion herbacée séchée,
- un deuxième convoyeur-sécheur (1B) disposé en aval du séparateur par densité (5) et configuré pour réaliser une deuxième étape de séchage (205) appliquée à la portion herbacée séchée jusqu'à ce que celle-ci possède une portion de masse sèche comprise entre 85 à 95%,
- un broyeur mécanique (7) disposé en aval du deuxième convoyeur sécheur (1B) et configuré pour réaliser une étape de broyage (207) de la portion herbacée séchée issue de la deuxième étape de séchage en particules de taille inférieure à 20mm, de préférence entre 5 et 15mm, pour éclatement mécanique de la protection de lignine des parois cellulaires,
- une presse à granulés (9) disposé en aval du broyeur mécanique (7) et configurée pour réaliser une étape de pressage (209) de la portion herbacée séchée et broyée en granulés.

7. Installation selon la revendication 6, **caractérisée en ce que** les premier et deuxième convoyeur-sécheurs (1A, 1B) sont des convoyeurs à lattes à mouvement de va-et-vient comprenant un plancher de transport avec des lattes mobiles d'entrainement (2) munies d'ouvertures (10) de soufflage d'air chaud pour le séchage de la matière organique contenant une majorité de plantes herbacées lors du transport.

8. Installation selon l'une des revendications 6 à 7, **caractérisée en ce qu'**elle comporte un chauffage ou four (11) disposé en aval de la presse à granulés (9) et configuré pour réaliser une étape de stérilisation thermique des granulés issus de la presse à granulés (9).

9. Granulés obtenus par agglomération de particules de matière organique de taille inférieure à 10mm par la mise en œuvre du procédé de traitement selon l'une au moins des revendications 1 à 5, la matière organique contenant au moins 80%, de préférence au moins 90% de plantes herbacées, notamment de la famille des graminées ou poacées et avec une masse sèche de 85% à 95%.

10. Granulés selon la revendication 9, **caractérisés en ce que** la matière organique est composée au moins partiellement de fumier paillé, et **en ce que** les granulés comportent entre 0,5 et 3% de matière fécale résiduelle formant un liant entre particules formant les granulés.

## Patentansprüche

1. Verfahren zur Behandlung von Abfällen aus organischem Material, das mehrheitlich, vorzugsweise mindestens 60 %, krautige Pflanzen, insbesondere aus der Familie der Gräser bzw. Poaceae, enthält, wie beispielsweise Tiermist und noch genauer Pferdemist, zur Herstellung von brennbarem Material,
**dadurch gekennzeichnet, dass** es die folgenden Schritte umfasst:
- einen ersten Schritt des Trocknens (201) des organischen Materials, das mehrheitlich krautige Pflanzen enthält, durch das Einblasen von Heißluft insbesondere mit einer Temperatur von 60 bis 120 °C, bis ein Trockenmasseanteil zwischen 60 % und 80 % erreicht ist,
- einen Schritt des Trennens (203) in einer Dichtetrennvorrichtung (5), um aus dem getrockneten organischen Material einen getrockneten Krautanteil zu extrahieren,
- einen zweiten Schritt des Trocknens (205), der auf den getrockneten Krautanteil angewendet wird, bis dieser einen Trockenmasseanteil zwischen 85 % und 95 % besitzt,
- einen Schritt des Zerkleinerns (207) des getrockneten Krautanteils, der aus dem zweiten Trocknungsschritt stammt, in einer mechanischen Zerkleinerungsvorrichtung (7) zu Partikeln mit einer Größe kleiner als 20 mm, vorzugsweise zwischen 5 und 15 mm, um den Ligninschutz der Zellwände mechanisch aufzuschließen,
- einen Schritt des Pressens (209) des getrockneten und zerkleinerten Krautanteils zu Pellets in einer Pelletpresse (9).

2. Verfahren nach Anspruch 1, **dadurch gekennzeichnet, dass** der erste und der zweite Trocknungsschritt (201, 205) während des Transports des organischen Materials, das mehrheitlich krautige Pflanzen enthält, zu der Dichtetrennvorrichtung (5) bzw. der mechanischen Zerkleinerungsvorrichtung (7) durchgeführt werden.

3. Verfahren nach Anspruch 2, **dadurch gekennzeichnet, dass** die Trocknungsschritte (201, 205) durch einen Lattenförderer (1A, 1B) durchgeführt werden, der einen Transportboden mit beweglichen Antriebslatten (2) beinhaltet, welche über Öffnungen (10) zum Einblasen von Heißluft zur Trocknung des organischen Materials, das mehrheitlich krautige Pflanzen enthält, während des Transports verfügen.

4. Verfahren nach einem der vorhergehenden Ansprüche, **dadurch gekennzeichnet, dass** die mechanische Zerkleinerungsvorrichtung (7) eine Hammerzerkleinerungsvorrichtung ist.

5. Verfahren nach einem der vorhergehenden Ansprüche, **dadurch gekennzeichnet, dass** es einen letzten Schritt des Erhitzens der Pellets auf eine Temperatur über 100 °C für mindestens 30 min zu deren Hitzesterilisation (211) umfasst.

6. Anlage zur Umsetzung des Behandlungsverfahrens nach mindestens einem der vorhergehenden Ansprüche, **dadurch gekennzeichnet, dass** sie Folgendes umfasst:
- eine erste Förder-/Trocknungsvorrichtung (1A), die dazu konfiguriert ist, einen ersten Schritt des Trocknens (201) des organischen Materials, das mehrheitlich krautige Pflanzen enthält, durch das Einblasen von Heißluft insbesondere mit einer Temperatur von 60 bis 120 °C durchzuführen, bis ein Trockenmasseanteil zwischen 60 % und 80 % erreicht ist,
- eine Dichtetrennvorrichtung (5), die stromabwärts der ersten Förder-/Trocknungsvorrichtung (1A) angeordnet ist und dazu konfiguriert ist, einen Trennschritt (203) durchzuführen, um aus dem getrockneten organischen Material einen getrockneten Krautanteil zu extrahieren,
- eine zweite Förder-/Trocknungsvorrichtung (1B), die stromabwärts der Dichtetrennvorrichtung (5) angeordnet ist und dazu konfiguriert ist, einen zweiten Trocknungsschritt (205) durchzuführen, der auf den getrockneten Krautanteil angewendet wird, bis dieser einen Trockenmasseanteil zwischen 85 % und 95 % besitzt,
- eine mechanische Zerkleinerungsvorrichtung (7), die stromabwärts der zweiten Förder-/Trocknungsvorrichtung (1B) angeordnet ist und dazu konfiguriert ist, einen Schritt des Zerkleinerns (207) des getrockneten Krautanteils, der aus dem zweiten Trocknungsschritt stammt, zu Partikeln mit einer Größe kleiner als 20 mm, vorzugsweise zwischen 5 und 15 mm, durchzuführen, um den Ligninschutz der Zellwände mechanisch aufzuschließen,
- eine Pelletpresse (9), die stromabwärts der mechanischen Zerkleinerungsvorrichtung (7) angeordnet ist und dazu konfiguriert ist, einen Schritt des Pressens (209) des getrockneten und zerkleinerten Krautanteils zu Pellets durchzuführen.

7. Anlage nach Anspruch 6, **dadurch gekennzeichnet, dass** die erste und die zweite Förder-/Trocknungsvorrichtung (1A, 1B) Lattenförderer mit einer Hin- und Herbewegung sind, die einen Transportboden mit beweglichen Antriebslatten (2) beinhalten, welche über Öffnungen (10) zum Einblasen von Heißluft zur Trocknung des organischen Materials, das mehrheitlich krautige Pflanzen enthält, während des Transports verfügen.

8. Anlage nach einem der Ansprüche 6 bis 7, **dadurch gekennzeichnet, dass** sie eine Heizung oder einen Ofen (11) umfasst, die/der stromabwärts der Pelletpresse (9) angeordnet ist und dazu konfiguriert ist, einen Schritt der thermischen Sterilisation der Pellets, die aus der Pelletpresse (9) stammen, durchzuführen.

9. Pellets, die durch Agglomeration von Partikeln aus organischem Material mit einer Größe kleiner als 10 mm durch die Umsetzung des Behandlungsverfahrens nach mindestens einem der Ansprüche 1 bis 5 erhalten werden, wobei das organische Material mindestens 80 %, vorzugsweise mindestens 90 %, krautige Pflanzen, insbesondere aus der Familie der Gräser bzw. Poaceae, mit einer Trockenmasse von 85 % bis 95 % enthält.

10. Pellets nach Anspruch 9, **dadurch gekennzeichnet, dass** das organische Material mindestens teilweise aus Strohmist besteht und dass die Pellets zwischen 0,5 und 3 % Restfäkalien umfassen, die ein Bindemittel zwischen Partikeln, die die Pellets bilden, bilden.

## Claims

1. Method for the treatment of waste organic matter containing a predominance of herbaceous plants, notably of the family of the Gramineae or Poaceae, preferably of at least 60%, such as, for example, animal manure and more specifically equine manure, for the production of combustible material,
**characterized in that** it comprises the following stages:
- a first stage of drying (201) the organic matter containing a predominance of herbaceous plants by blowing hot air, notably at a temperature ranging from 60°C to 120°C, until a dry weight portion of between 60% and 80% is reached,
- a stage of separation (203) in a density separator (5) in order to extract a dried herbaceous portion from the dried organic matter,
- a second drying stage (205) applied to the dried herbaceous portion until the latter has a dry weight portion of between 85% and 95%,
- a stage of grinding (207) the dried herbaceous portion resulting from the second drying stage in a mechanical grinder (7) to give particles with a size of less than 20 mm, preferably between 5 mm and 15 mm, for mechanical bursting of the lignin protection of the cell walls,
- a stage of pressing (209) the dried and ground herbaceous portion to give pellets in a pellet press (9).

2. Method according to Claim 1, **characterized in that** the first and second drying stages (201, 205) are carried out during the transportation of the organic matter containing a predominance of herbaceous plants respectively to the density separator (5) and to the mechanical grinder (7).

3. Method according to Claim 2, **characterized in that** the drying stages (201, 205) are carried out by a slat conveyor (1A, 1B) comprising a transportation floor with mobile drive slats (2) provided with openings (10) for hot air blowing for the drying of the organic matter containing a predominance of herbaceous plants during the transportation.

4. Method according to one of the preceding claims, **characterized in that** the mechanical grinder (7) is a hammer mill.

5. Method according to one of the preceding claims, **characterized in that** it comprises a final stage of heating the pellets at a temperature of greater than 100°C for at least 30 min for their heat sterilization (211).

6. Installation for the implementation of the treatment method according to at least one of the preceding claims, **characterized in that** it comprises:
- a first conveyor-dryer (1A) configured to carry out a first stage of drying (201) the organic matter containing a predominance of herbaceous plants by blowing hot air, notably at a temperature ranging from 60°C to 120°C, until a dry weight portion of between 60% and 80% is reached,
- a density separator (5) arranged downstream of the first conveyor-dryer (1A) and configured to carry out a separation stage (203) in order to extract a dried herbaceous portion from the dried organic matter,
- a second conveyor-dryer (1B) arranged downstream of the density separator (5) and configured to carry out a second drying stage (205) applied to the dried herbaceous portion until the latter has a dry weight portion of between 85% and 95%,
- a mechanical grinder (7) arranged downstream of the second conveyor-dryer (1B) and configured to carry out a stage of grinding (207) the dried herbaceous portion resulting from the second drying stage to give particles with a size of less than 20 mm, preferably between 5 mm and 15 mm, for mechanical bursting of the lignin protection of the cell walls,
- a pellet press (9) arranged downstream of the mechanical grinder (7) and configured to carry out a stage of pressing (209) the dried and ground herbaceous portion to give pellets.

7. Installation according to Claim 6, **characterized in that** the first and second conveyor-dryers (1A, 1B) are slat conveyors having a to-and-fro movement comprising a transportation floor with mobile drive slats (2) provided with openings (10) for hot air blowing for the drying of the organic matter containing a predominance of herbaceous plants during the transportation.

8. Installation according to either of Claims 6 and 7, **characterized in that** it comprises heating or an oven (11) arranged downstream of the pellet press (9) and configured to carry out a stage of heat sterilization of the pellets resulting from the pellet press (9).

9. Pellets obtained by agglomeration of particles of organic matter with a size of less than 10 mm by the implementation of the treatment process according to at least one of Claims 1 to 5, the organic matter containing at least 80%, preferably at least 90%, of herbaceous plants, notably of the family of the Gramineae or Poaceae, and with a dry weight of 85% to 95%.

10. Pellets according to Claim 9, **characterized in that** the organic matter is composed, at least partially, of strawy manure and **in that** the pellets comprise between 0.5% and 3% of residual faecal matter forming a binder between particles forming the pellets.
